# EUROPEAN PATENT SPECIFICATION

(11) **EP 2 559 562 B1**
(45) Date of publication and mention of the grant of the patent: **04.12.2013**
(21) Application number: 11461532.1
(22) Date of filing: 16.08.2011
(51) Int. Cl.: B42D 15/10

(54) **A data carrier with a personalized element**
Datenträger mit personalisiertem Element
Support de données avec élément personnalisé

(43) Date of publication of application: 20.02.2013
(73) Proprietor: Polska Wytwornia Papierow Wartosciowych S.A., 00-222 Warszawa (PL)
(72) Inventor: Supera, Jaroslaw, 00-222 Warszawa (PL); Ragus, Joanna, 00-222 Warszawa (PL); Olszynska, Agata, 00-222 Warszawa (PL); Wojcik, Pawel, 00-222 Warszawa (PL); Leszczynska-Ambroziewicz, Ewa, 00-222 Warszawa (PL)
(74) Representative: Pawlowski, Adam

(56) References cited:
- GB-A- 1 424 442
- US-A1- 2007 085 337

## Description

The present invention relates to a data carrier, in particular a security document in form of a card, passport etc., with a personalized element which is highly resistant to high temperatures.

Security documents often have a form of a plastic document which comprises a plurality of personalized elements, such as a name, a personal ID number, date of birth etc, in form of printed, embossed or engraved markings or data recorded on an integrated circuit chip embedded within the document. Documents with personalized markings are often the first means for identifying accident victims. However, in case of accidents involving fire and high temperature, typical documents made of plastic can melt, which makes such identification impossible.

A US patent application US2007/0085337A1 describes a multilayer security element in form of a card having a metal layer into which are introduced identifiers, wherein the metal layer is disposed between two translucent coating layers such that the identifiers display a watermark effect. The metal layer has a thickness of about 5 to 10 micrometers and is made of aluminum, copper or gold. Therefore, the metal layer is relatively thin and made of a metal of a relatively low melting temperature, below 1100°C. A typical indoor fire temperature reaches 1200°C, therefore such card, when subject to a typical fire conditions indoors, will melt together with the metal layer. Even when subject to high temperature for shorter time, when the card would heat to a temperature above the melting point of the plastic layers, but below the melting point of the metal layer, such a thin metal layer would become highly deformed upon melting of the plastic layer. The card is therefore designed to provide a watermark security feature, but not to be resistant to high temperatures and is not usable for identification of fire victims.

Therefore, the known plastic cards are not resistant to high temperatures during fire and in such conditions do not fulfill their identification function.

Military personnel uses metal identification labels, so called "dog tags", which are a pair of metal plates, having dimensions of about 5 cm x 2,8 cm and thickness of about 1 mm and including embossed information on e.g. the name, nationality, ID number, religion, blood group etc. Such labels allow identification of victims subject to high fire temperatures for prolonged time. However, such identification labels are not convenient to wear for civilians. Due to large dimensions, they are also not applicable to be integrated with other security documents, such as plastic identification cards.

The aim of the present invention is to provide a data carrier which provides usefulness of a typical plastic document, but is resistant to high temperatures such that at least some of the data can be read when the document is subject to fire.

The object of the invention is a data carrier in form of a laminated document comprising plastic layers, which comprises a non-flammable element laminated between the plastic layers and having a form of a plate with personalized identifying marks forming holes in the plate, wherein the non-flammable element has a thickness above 50 micrometers and a melting point above 900°C.

Preferably, the non-flammable element has a mesh-like structure.

Preferably, the non-flammable element is melted within two adjacent laminate layers.

Preferably, the non-flammable element is embedded in a cut-out hole in an intermediate layer.

Preferably, the non-flammable element is made of metal.

Preferably, the layers between the non-flammable element and one external side of the data carrier are translucent or transparent and the layers between the non-flammable element and the other external side of the data carrier are opaque.

Preferably, layers between the non-flammable element and both external sides of the data carrier are translucent or transparent.

Preferably, the layers between the non-flammable element and both external sides of the data carrier are opaque.

Another object of the invention is a method for manufacturing of a data carrier in form of a laminated document by laminating plastic layers, wherein before laminating, a non-flammable element having a form of a plate with personalized identifying marks forming holes in the plate and having a thickness above 50 micrometers and a melting point above 900°C is arranged between the plastic layers of the data carrier and next the element is laminated with the plastic layers.

The present invention is shown by means of an exemplary embodiments on a drawing, on which Fig. 1 shows a top view of the data carrier, Fig. 2 shows assembly view of one exemplary embodiment, Fig. 3 shows assembly view of another exemplary embodiment, Fig. 4 shows a non-flammable element and Fig. 5 shows a method for manufacturing of the data carrier.

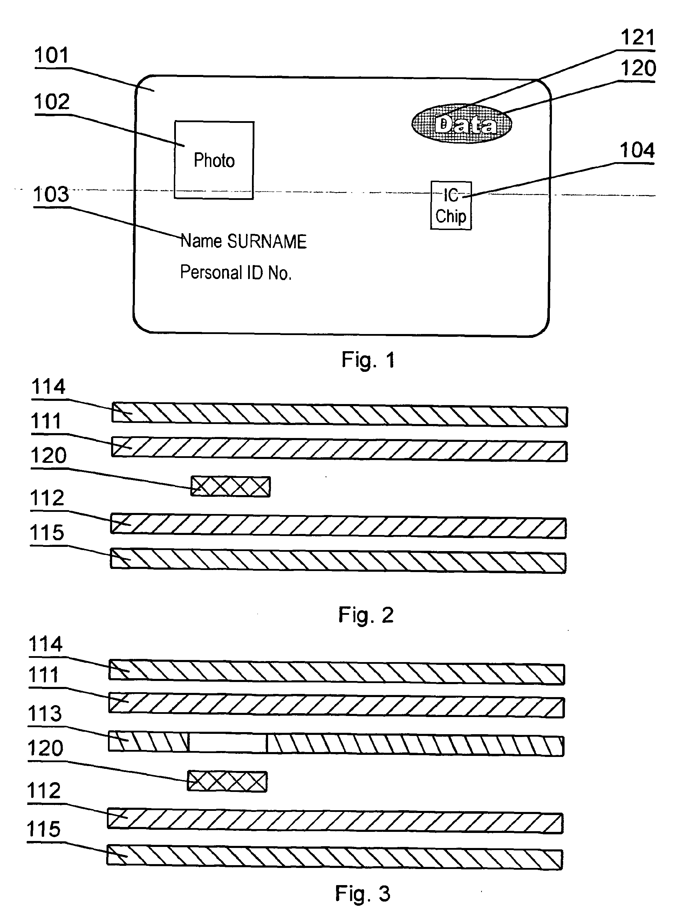

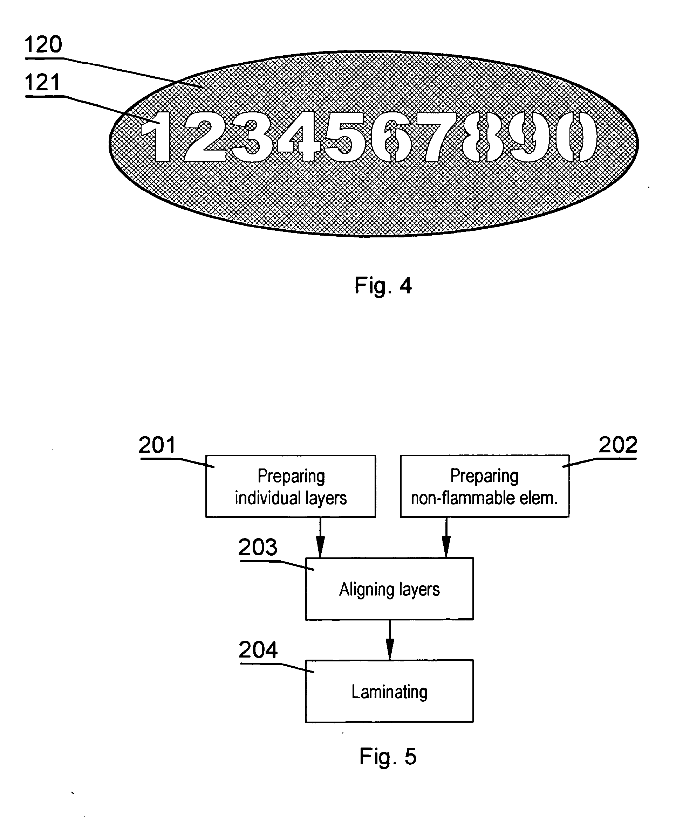

Fig. 1 shows a top view of the data carrier according to the invention, which has a form of a typical identification document 101 with a dimensions of e.g. approximately 8 cm x 5 cm and with a plurality of standard identification elements, such as a printed -photograpA--402 of the face of the document holder, embossed or engraved name and ID number 103 and an integrated circuit chip 104. The printed or engraved elements can be applied to internal or external layers of the data carrier. In addition to the standard identification elements, the data carrier according to the invention comprises a non-flammable element 120, having a form of a plate in which personalized identifying marks 121 are engraved, as shown in Fig. 4. The non-flammable element 120 has a thickness of above approximately 50 micrometers and a melting point of approximately above 900°C, preferably above 1200°C, and more preferably above 1400°C. The higher the melting point, the more resistant is the element to fire. It is preferably made of metal. Such combination of thickness and melting point provides relatively high resistance to temperature of fire, such as to allow reading of the identifying marks from a document which has been subject to fire and on which the other identifying elements, especially the printed elements and elements embossed or engraved in the plastic layers, have become deformed.

The data carrier is a laminate of plastic layers. The embodiment shown in Fig. 2 comprises opaque layers 111, 112, between which the non-flammable element 120 is laminated. The layers 111, 112 are covered by transparent layers 114, 115. The card may further comprise additional layers between the non-flammable element 120 and the external layers. The layers 111, 112, 114, 115 can be made of materials typical to plastic card laminates, such as polycarbonate, and may have conventional identifying marks and other security elements performed therein. Other security elements may be embedded within the card, such as integrated circuit chips.

The non-flammable element 120 may have a mesh-like structure as shown in Fig. 4, with a mesh window size of from about 0,5 mm x 0,5 mm to about 0,01 mm x 0,01 mm and mesh wire diameter of from about 0,025 mm to about 0,6mm. The non-flammable element 120 has personalized identifying marks 121 made preferably by laser engraving and/or cutting. The personalized identifying marks 121 are marks characterizing the particular card and different from at least some of the marks applied to other cards of this type. The personalized identifying marks 121 may define the name of the card holder, an ID number, blood group or other personalized features.

In case the non-flammable element 120 has a mesh-like structure, it can be laminated between two adjacent laminate layers 111, 112, wherein during the lamination process, the polymer fills in the free area within the mesh.

The layers between the non-flammable element 120 and both external sides of the card can be opaque. In such a case the non-flammable element is hidden and forms a security feature which can be read by a metal detector or an x-ray reader, but is visible only after the document is subject to fire.

The layers between the non-flammable element 120 and one external side of the card can be at least translucent or transparent, while the layers between the non-flammable element 120 and the other external side of the card can be opaque. In such a case the non-flammable element forms a security feature which is visible from only one side of the card.

The layers between the non-flammable element 120 and both external sides of the card can be at least translucent or transparent. In such a case the non-flammable element 120 forms a security feature which is visible from both sides of the card, either as a watermark or clearly visible, respectively.

The translucency or opaqueness of the layers can be obtained by using a layer having such properties or by printing a transparent layer with a translucent or opaque ink.

As shown in the embodiment of Fig. 3, the non-flammable element 120 can be inserted in a cut-out hole in an intermediate layer 113, which facilitates using relatively thick non-flammable elements 120.

Fig. 5 shows the steps of a method for manufacturing the data carrier. First, in step 201, the individual layers are prepared. This step may involve printing of the layers, or making an opening for the non-flammable element in an intermediate layer. In step 202 the non-flammable element is prepared by making personalized identifying marks therein. Next, in step 203, the layers are aligned on top of each other and the non-flammable element is placed between the layers. Next, in step 204, the sheets are inserted to a laminating press, wherein the layers are joined by high temperature and high pressure. Next, the laminated sheet can be subject to further processing steps, cutting a large sheet to smaller sheets, laser engraving, wherein the other data of the card owner applied in the last stage of personalization can be collected from a database on the basis of signs read from the non-flammable element or on the basis of signs applied to the data carrier at a different position during preliminary personalization stage.

Therefore, the data carrier according to the invention; which comprises the non-flammable element 120 with personalized identifying marks 121, is particularly useful for identifying victims of fires, wherein the victim's data carrier has been subject to high temperature for prolonged time.

## Claims

1. A data carrier in form of a laminated document (101) comprising plastic layers, **characterized in that** it comprises a non-flammable element (120) laminated between the plastic layers (111, 112) and having a form of a plate with personalized identifying marks (121) forming holes in the plate, wherein the non-flammable element (120) has a thickness above 50 micrometers and a melting point above 900°C.

2. The data carrier according to claim 1, wherein the non flammable element (120) has a mesh-like structure.

3. The data carrier according to claim 2, wherein the non-flammable element (120) is melted within two adjacent laminate layers (111, 112).

4. The data carrier according to any of previous claims, wherein the non-flammable element (120) is embedded in a cut-out hole in an intermediate layer (113).

5. The data carrier according to any of previous claims, wherein the non-flammable element (120) is made of metal.

6. The data carrier according to any of previous claims, wherein the layers between the non-flammable element (120) and one external side of the data carrier (101) are translucent or transparent and the layers between the non-flammable element (120) and the other external side of the data carrier (101) are opaque.

7. The data carrier according to any of claims 1-6, wherein the layers between the non-flammable element (120) and both external sides of the data carrier (101) are translucent or transparent.

8. The data carrier according to any of claims 1-6, wherein the layers between the non-flammable element (120) and both external sides of the data carrier (101) are opaque.

9. A method for manufacturing of a data carrier in form of a laminated document (101) by laminating plastic layers, **characterized in that** before laminating, a non-flammable element (120) having a form of a plate with personalized identifying marks (121) forming holes in the plate and having a thickness above 50 micrometers and a melting point above 900°C is arranged between the plastic layers (111, 112) of the data carrier and next the element (120) is laminated with the plastic layers.

## Patentansprüche

1. Datenträger in Form eines laminierten Dokuments (101), Kunststoffschichten umfassend, **dadurch gekennzeichnet, dass** es ein nicht entflammbares Element (120) umfasst, das zwischen die Kunststoffschichten (111, 112) laminiert ist und die Form einer Platte mit individualisierten identifizierenden Zeichen (121) aufweist, die Öffnungen in der Platte bilden, wobei das nicht entflammbare Element (120) eine Dicke vom mehr als 50 Mikrometern und einen Schmelzpunkt von über 900 °C aufweist.

2. Datenträger nach Anspruch 1, wobei das nicht entflammbare Element (120) eine netzähnliche Struktur aufweist.

3. Datenträger nach Anspruch 2, wobei das nicht entflammbare Element (120) in zwei angrenzende Laminatschichten (111, 112) eingeschmolzen ist.

4. Datenträger nach einem der vorhergehenden Ansprüche, wobei das nicht entflammbare Element (120) in eine ausgeschnittene Öffnung in einer Zwischenschicht (113) eingebettet ist.

5. Datenträger nach einem der vorhergehenden Ansprüche, wobei das nicht entflammbare Element (120) aus Metall hergestellt ist.

6. Datenträger nach einem der vorhergehenden Ansprüche, wobei die Schichten zwischen dem nicht entflammbaren Element (120) und einer Außenseite des Datenträgers (101) durchscheinend oder durchsichtig sind und die Schichten zwischen dem nicht entflammbaren Element (120) und der anderen Außenseite des Datenträgers (101) undurchsichtig sind.

7. Datenträger nach einem der Ansprüche 1 bis 6, wobei die Schichten zwischen dem nicht entflammbaren Element (120) und beiden Außenseiten des Datenträgers (101) durchscheinend oder durchsichtig sind.

8. Datenträger nach einem der Ansprüche 1 bis 6, wobei die Schichten zwischen dem nicht entflammbaren Element (120) und beiden Außenseiten des Datenträgers (101) undurchsichtig sind.

9. Verfahren zum Herstellen eines Datenträgers in Form eines laminierten Dokuments (101) durch Laminieren von Kunststoffschichten, **dadurch gekennzeichnet, dass** vor dem Laminieren ein nicht entflammbares Element (120), das die Form einer Platte mit individualisierten identifizierenden Zeichen (121) aufweist, die Öffnungen in der Platte bilden, und das eine Dicke vom mehr als 50 Mikrometern und einen Schmelzpunkt vom über 900 °C aufweist, zwischen den Kunststoffschichten (111, 112) des Datenträgers angeordnet wird und als Nächstes das Element (120) mit den Kunststoffschichten laminiert wird.

## Revendications

1. Support de données sous forme d'un document laminé (101) comprenant des couches de matière plastique, **caractérisé en ce qu'**il comprend un élément non-inflammable (120) laminé entre 5 couches de matière plastique (111, 112) et ayant une forme de plaque avec des marques d'identification personnalisées (121) formant des trous dans la plaque, dans lequel l'élément non-inflammable (120) a une épaisseur supérieure à 50 micromètres et un point de fusion supérieur à 900°C.

2. Support de données selon la revendication 1, dans lequel l'élément non-inflammable (120) a une structure de type maillé.

3. Support de données selon la revendication 2, dans lequel l'élément non-inflammable (120) est fusionné dans deux couches laminées adjacentes (111, 112).

4. Support de données selon l'une quelconque des précédentes revendications, dans lequel l'élément non-inflammable (120) est encastré dans un trou de découpe dans une couche intermédiaire (113).

5. Support de données selon l'une quelconque des revendications précédentes, dans lequel l'élément non-inflammable (120) est fait de métal.

6. Support de données selon l'une quelconque des revendications précédentes, dans lequel les couches entre l'élément non-inflammable (120) et un côté externe du support de données (101) sont translucides ou transparentes et les couches entre l'élément non-inflammable (120) et l'autre côté externe du support de données (101) sont opaques.

7. Support de données selon l'une quelconque des revendications 1-6, dans lequel les couches entre l'élément non-inflammable (120) et les deux côtés externes du support de données (101) sont translucides ou transparents.

8. Support de données selon l'une quelconque des revendications 1-6, dans lequel les couches entre l'élément non-inflammable (120) et les deux côtés externes du support de données (101) sont opaques.

9. Procédé de fabrication d'un support de données sous forme d'un document laminé (101) en laminant des couches de matière plastique, **caractérisé en ce qu'**avant le laminage, un élément non-inflammable (120) ayant une forme de plaque avec des marques d'identification personnalisées (121) formant des trous dans la plaque et ayant une épaisseur supérieure à 50 micromètres et un point de fusion supérieur à 900°C est disposé entre les couches de matière plastique (111, 112) du support de données et à côté de l'élément (120) est laminé avec les couches de matière plastique.
